# EUROPEAN PATENT APPLICATION

(11) **EP 4 831 052 A1**
(43) Date of publication of application: **28.10.2026**
(21) Application number: 26173328.1
(22) Date of filing: 20.04.2026
(51) Int. Cl.: B62L 3/00, B62J 11/00, B62K 11/04, B62M 7/02

(54) **STRADDLED VEHICLE**

(30) Priority: 24.04.2025 JP 2025072637
(71) Applicant: Yamaha Hatsudoki Kabushiki Kaisha, Iwata-shi, Shizuoka 438-8501 (JP)
(72) Inventor: TSUZUKI, Kenzaburo, Iwata-shi, 4388501 (JP)
(74) Representative: Studio Torta S.p.A.

(57) **Abstract**

There is disclosed a straddled vehicle (1) includes a vehicle frame (2), a front wheel (4), a rear wheel (7), a hydraulic braking system (10), a braking-force adjustment unit (11), a unit bracket (12), and a mounting structure (13); the vehicle frame including a left frame (21) and a right frame (22); the right frame (22) being disposed to face the left frame (21) in a vehicle width direction; the unit bracket (12) holding the braking-force adjustment unit (11); a first hole portion (55) of the mounting structure (13) is provided on the left frame (21); a pin portion (56) of the mounting structure (13) being inserted into the first hole portion (55) to mount the unit bracket (12) to the left frame (21); a fastening structure (57) of the mounting structure (!3) being configured to fasten the unit bracket (12) to the right frame (22).

## Description

### Technical Field

The present invention relates to a straddled vehicle.

### Prior Art

In a straddled vehicle described in Japanese Laid-open Patent Application Publication No. 2013-220661, a unit bracket holds a hydraulic control unit. The unit bracket is fixed to left and right frames of a vehicle frame. Specifically, a pair of bolts are respectively inserted into a pair of insertion holes in a flange portion of the unit bracket and are respectively threaded with a left threaded hole of the left frame and a right threaded hole of the right frame.

In conventional straddled vehicle, it is necessary to respectively thread the pair of bolts with the left threaded hole of the left frame and the right threaded hole of the right frame. In this case, when the left threaded hole and the right threaded hole are respectively formed on the left frame and the right frame, it is necessary to ensure the positional accuracy of the left threaded hole and the right threaded hole. In other words, if the positional accuracy error of the left threaded hole and the right threaded hole becomes large, it becomes difficult to thread the pair of bolts with the left and right threaded holes. As a result, it becomes difficult to easily mount the unit bracket to the vehicle frame.

The object of the present invention is to provide a straddled vehicle on which an unit bracket can be easily mounted to a vehicle frame

The straddled vehicle according to one aspect of the present invention includes a vehicle frame, a front wheel, a rear wheel, a hydraulic braking system, a braking-force adjustment unit, an unit bracket and a mounting structure. The vehicle frame includes a left frame and a right frame. The right frame is disposed to face the left frame in a vehicle width direction.

The front wheel is supported by the vehicle frame. The rear wheel is supported by the vehicle frame behind the front wheel. The hydraulic braking system is configured to control braking force on at least one of the front wheel and the rear wheel. The braking-force adjustment unit is configured to adjust the braking force of the hydraulic braking system. The unit bracket holds the braking-force adjustment unit.

The mounting structure is used to mount the unit bracket to the vehicle frame. The mounting structure includes a first hole portion, a pin portion and a fastening structure. The first hole portion is provided on one of the left frame and the right frame. The pin portion is inserted into the first hole portion to mount the unit bracket to the one of the left frame and the right frame. The fastening structure is configured to fasten the unit bracket to the other of the left frame and the right frame.

In the straddled vehicle according to this aspect, the unit bracket can be rotated in a state where the pin portion is inserted into the first hole portion of the one of the left frame and the right frame. As a result, the unit bracket is set in a fastening position and is fastened to the other of the left frame and the right frame by the fastening structure. In this straddled vehicle, since the unit bracket is fastened to only the other of the left frame and the right frame, the unit bracket can be easily mounted to the vehicle frame in comparison with the conventional straddled vehicle.

The straddled vehicle can be configured as follows. The pin portion is formed integrally with the unit bracket. With this configuration, an initial position of the unit bracket relative to the vehicle frame can be easily set by inserting the pin portion into the first hole portion.

The straddled vehicle can be configured as follows. The pin portion includes a stopper portion which is configured to prevent the pin portion from coming out of the first hole portion. With this configuration, the pin portion can be prevented from coming out of the first hole portion.

The straddled vehicle can be configured as follows. The fastening structure is disposed at a position which is different from a position of the pin portion in a front-rear direction. With this configuration, the unit bracket can be easily set to the fastening position.

The straddled vehicle can be configured as follows. The fastening structure includes a female threaded portion, a second hole portion and a bolt. The female threaded portion is provided on the unit bracket. The second hole portion is provided on the other of the left frame and the right frame. The bolt is inserted into the second hole portion and is threaded with the female threaded portion. With this configuration, the unit bracket can be reliably fixed to the vehicle frame by the fastening structure.

The straddled vehicle can be configured as follows. A direction in which an axis of the bolt extends is different from a direction in which an axis of the pin portion extends. With this configuration, the bolt can be easily inserted into the second hole portion and can be easily threaded with the female threaded portion after rotating the unit bracket around the pin portion. In addition, the bolt can be easily operated by a tool from outside of the vehicle frame.

The straddled vehicle can be configured as follows. The direction in which an axis of the bolt extends is different from a circumferential direction around an axis of the pin portion. With this configuration, the bolt can be easily inserted into the second hole portion and can be easily threaded with the female threaded portion after rotating the unit bracket around the pin portion. In addition, the bolt can be easily operated by a tool from outside of the vehicle frame.

The straddled vehicle can be configured as follows. The other of the left frame and the right frame includes upper and lower frames. The upper and lower frames are disposed at an interval from each other in a vertical direction. The fastening structure is disposed between the upper frame and the lower frame. With this configuration, even if the fastening structure is disposed between the upper and lower frames, the bolt can be easily operated by a tool from the outside of the vehicle frame.

The straddled vehicle can be configured as follows. The bolt includes a plurality of bolts. In the conventional straddled vehicle, the unit bracket is supported at two points. With this configuration, the unit bracket is supported at three or more points by the pin portion and the plurality of bolts. As a result, with this configuration, the unit bracket can be stably supported on the vehicle frame compared to the prior art.

The straddled vehicle can be configured as follows. The pin portion is inserted into the first hole portion in a vertical direction. At least two of the plurality of bolts are disposed side by side in the vertical direction. With this configuration, a disengagement of the pin portion can be reliably prevented by disposing the at least two of the plurality of bolts side-by-side in the vertical direction.

The straddled vehicle can be configured as follows. The second hole portion is an elongated hole which extends in a circumferential direction around an axis of the pin portion. With this configuration, the female threaded portion of the unit bracket can easily face the second hole portion of the vehicle frame after rotating the unit bracket around the pin portion.

The straddled vehicle can be configured as follows. The mounting structure includes a first elastic member. The first elastic member is disposed between the first hole portion and the pin portion. With this configuration, vibration, which is transmitted from the vehicle frame to the unit bracket and the braking-force adjustment unit, can be reduced by the first elastic member.

The straddled vehicle can be configured as follows. The mounting structure includes a second elastic member. The second elastic member is disposed between the unit bracket and the other of the left frame and the right frame. With this configuration, a vibration, which is transmitted from the vehicle frame to the unit bracket and the braking-force adjustment unit, can be reduced by the second elastic member.

The straddled vehicle can be configured as follows. The braking-force adjustment unit is disposed between the pin portion and the fastening structure in the vehicle width direction. The braking-force adjustment unit is disposed at a position which is closer to the fastening structure than the pin portion in the vehicle width direction. With this configuration, the above layout can allow the fastening structure to bear more weight of the braking-force adjustment unit than the pin portion.

The straddled vehicle can be configured as follows. The straddled vehicle further includes a fuel tank. The fuel tank is disposed above the left frame and the right frame. The vehicle frame includes a head pipe. The left frame and the right frame are connected to the head pipe. At least a portion of the braking-force adjustment unit is disposed behind the head pipe and in front of the fuel tank in a plan view of the vehicle. With this configuration, a space between the head pipe and the fuel tank can be effectively utilized as a space for the braking-force adjustment unit.

### Disclosure of the invention

According to the present invention, an unit bracket can be easily mounted to a vehicle frame on a straddled vehicle.

### Brief description of the drawings

FIG. 1 is a side view of a straddled vehicle according to the embodiment.
FIG. 2 is a top view of a vehicle frame, a braking-force adjustment unit and an unit bracket.
FIG. 3A is a left-side view of the vehicle frame, the braking-force adjustment unit and the unit bracket.
FIG. 3B is a right-side view of the vehicle frame, the braking-force adjustment unit and the unit bracket.
FIG. 4 is a rear view of the vehicle frame, the braking-force adjustment unit and the unit bracket.
FIG. 5 is a rear view of the braking-force adjustment unit and the unit bracket.
FIG. 6 is a cross-sectional view near a pin portion of a mounting structure.
FIG. 7 is a cross-sectional view near a fastening structure of the mounting structure.
FIG. 8 is a right-side view of the unit bracket.

### Embodiments of the invention

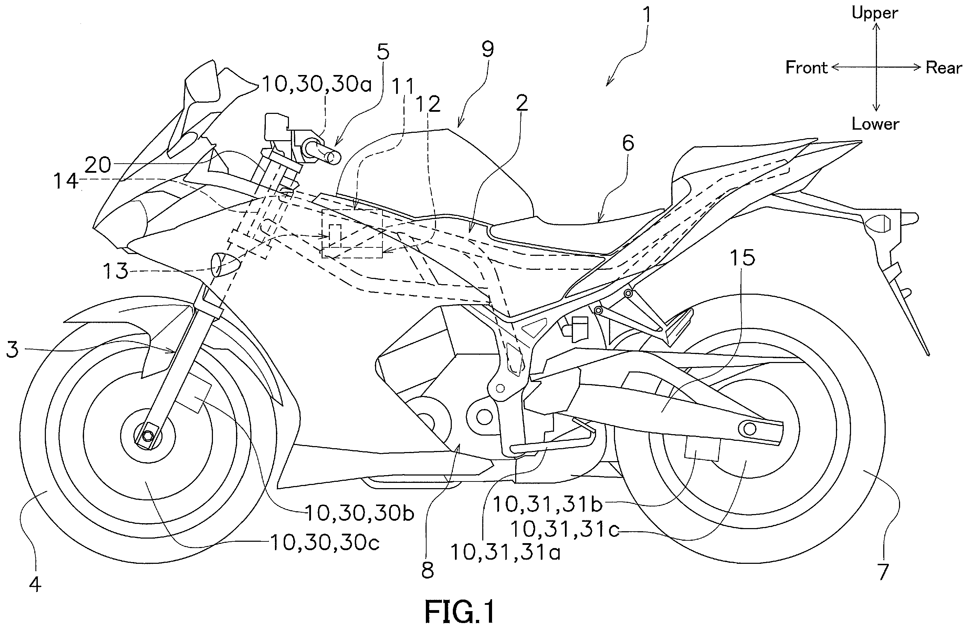

Hereinafter, an embodiment of a straddled vehicle will be described with reference to the drawings. FIG. 1 is a side view of a straddled vehicle 1 according to the embodiment. The straddled vehicle 1 is a motorcycle. As shown in FIG. 1, the straddled vehicle 1 includes a vehicle frame 2, a front fork 3, a front wheel 4, a handle 5, a seat 6, a rear wheel 7 and an engine 8. The straddled vehicle 1 further includes a fuel tank 9, a hydraulic braking system 10, a braking-force adjustment unit 11, a unit bracket 12, and a mounting structure 13.

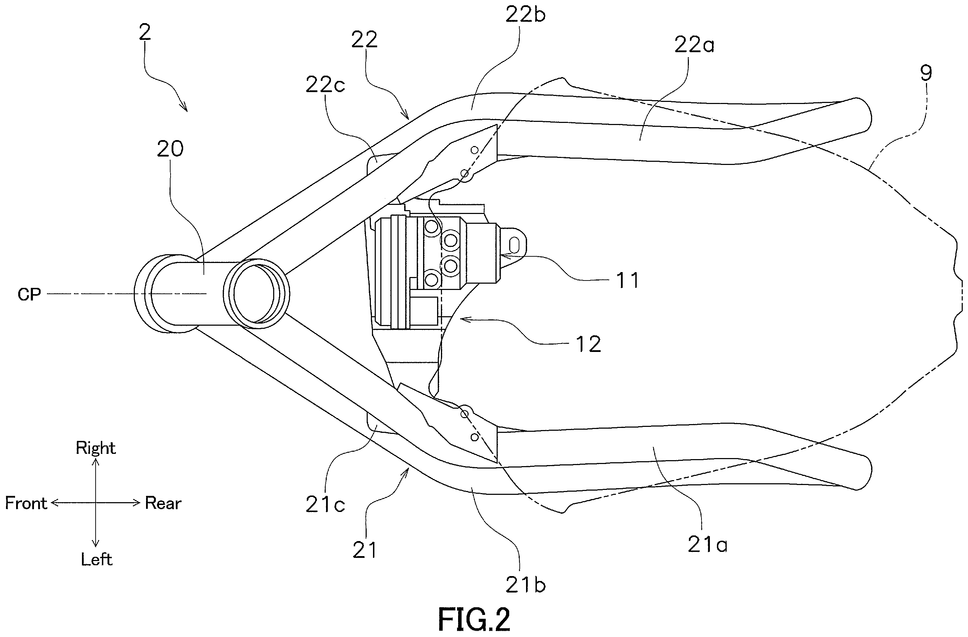

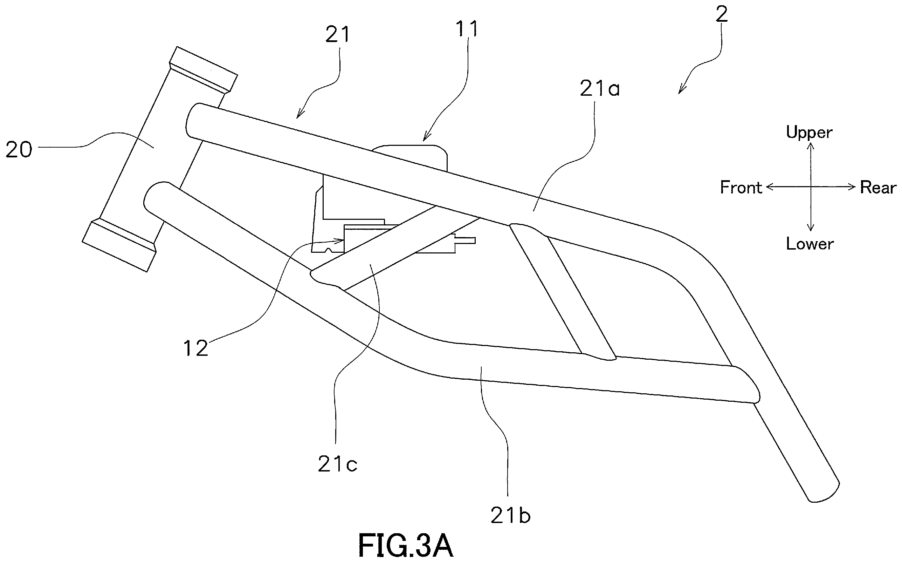

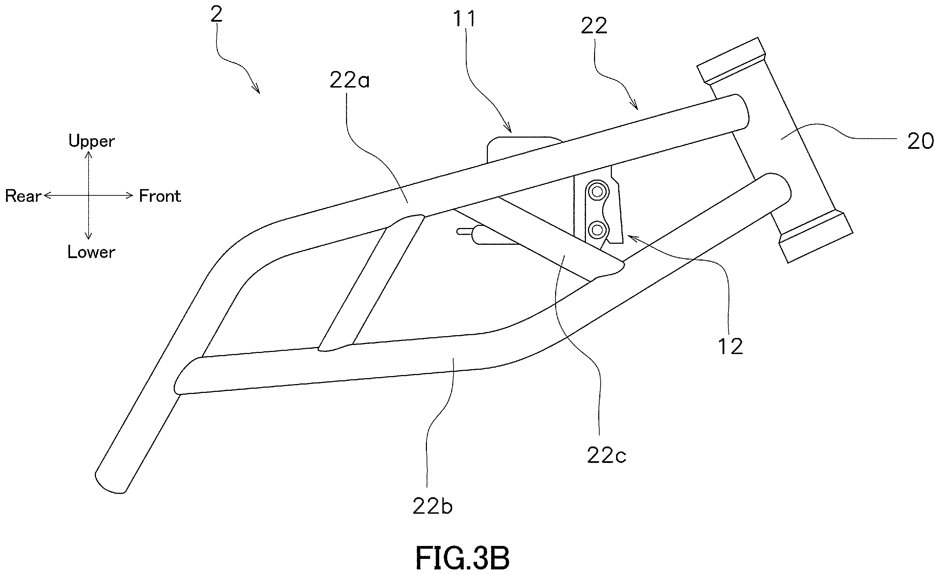

As shown in FIGS. 2, 3A and 3B, the vehicle frame 2 includes a head pipe 20, a left frame 21, and a right frame 22. The left frame 21 and the right frame 22 are connected to the head pipe 20.

As shown in FIG. 3A, the left frame 21 includes a left upper frame 21a, a left lower frame 21b, and a left connecting frame 21c. The left upper frame 21a and the left lower frame 21b are disposed at an interval from each other in a vertical direction. The left connecting frame 21c is disposed between the left upper frame 21a and the left lower frame 21b, and connects the left upper frame 21a and the left lower frame 21b.

As shown in FIG. 2, the right frame 22 is disposed to face the left frame 21 in a vehicle width direction. The vehicle width direction is a direction orthogonal to a center plane CP of the vehicle frame 2. The center plane CP passes through a center of the head pipe 20 in a vehicle top view. The vehicle width direction corresponds to a left-right direction. In the following description, the vehicle width direction is referred to as the left-right direction.

The center plane CP of the vehicle frame 2 extends in the vertical direction and a longitudinal direction. A direction in which gravity acts in a state where the straddled vehicle 1 is upright on the ground is defined as downward. A direction opposite to downward is defined as upward. A front-rear direction is a direction orthogonal to the left-right direction and the vertical direction.

As shown in FIG. 3B, the right frame 22 includes a right upper frame 22a, a right lower frame 22b, and a right connecting frame 22c. The right upper frame 22a and the right lower frame 22b are disposed at an interval from each other in the vertical direction. The right connecting frame 22c is disposed between the right upper frame 22a and the right lower frame 22b, and connects the right upper frame 22a and the right lower frame 22b.

As shown in FIG. 1, the front fork 3 is supported so as to be rotatable relative to the vehicle frame 2. Specifically, the front fork 3 is connected to the steering shaft 14. The steering shaft 14 is supported so as to be rotatable relative to the head pipe 20.

The front wheel 4 is supported by the vehicle frame 2. Specifically, the front wheel 4 is rotatably supported relative to the front fork 3. The front fork 3 is connected to the steering shaft 14. The handle 5 is connected to the steering shaft 14. The seat 6 is supported by the vehicle frame 2 behind the handle 5. Specifically, the seat 6 is supported by the left upper frame 21a and right upper frame 22a behind the handle 5. The left upper frame 21a and right upper frame 22a is shown in FIG. 2.

As shown in FIG. 1, the rear wheel 7 is supported by the vehicle frame 2 behind the front wheel 4. Specifically, the swing arm 15 is supported by the vehicle frame 2 so as to be swingable relative to the vehicle frame 2. The rear wheel 7 is rotatably supported by the swing arm 15.

The engine 8 is supported by the vehicle frame 2. Driving force of the engine 8 is transmitted to the rear wheel 7. The fuel tank 9 is supported by the vehicle frame 2. The fuel tank 9 is disposed between the head pipe 20 and the seat 6 in the front-rear direction. The fuel tank 9 is disposed above the left frame 21 and the right frame 22. The fuel tank 9 is supported by the left frame 21 and the right frame 22, for example, by the left upper frame 21a and the right upper frame 22a shown in FIG. 2.

The hydraulic braking system 10 shown in FIG. 1 is configured to control braking force on at least one of the front wheel 4 and the rear wheel 7. In this embodiment, the hydraulic braking system 10 is configured to control the braking force on the front wheel 4 and the rear wheel 7.

As shown in FIG. 1, the hydraulic braking system 10 includes a front-wheel braking device 30 and a rear-wheel braking device 31. The front-wheel braking device 30 includes a brake lever 30a, a front caliper 30b and a front disc 30c. The brake lever 30a is provided on the handle 5. The brake lever 30a is connected to the front caliper 30b via a brake hose (not shown). A configuration of the front-wheel braking device 30 will be described briefly, since the configuration of the front-wheel braking device 30 is substantially the same as prior art.

The front caliper 30b is provided on the front fork 3. The front caliper 30b includes a piston and a brake pad. When the brake lever 30a is operated, the piston of the front caliper 30b is actuated by hydraulic pressure in the brake hose. The brake pad of the front caliper 30b is pressed against the front disc 30c by this operation of the piston. As a result, the braking force acts on the front wheel 4.

The rear-wheel braking device 31 includes a brake pedal 31a, a rear caliper 31b and a rear disc 31c. The brake pedal 31a is provided on the vehicle frame 2. The brake pedal 31a is connected to the rear caliper 31b via a brake hose (not shown). A configuration of the rear-wheel braking device 31 will be described briefly, since the configuration of the rear-wheel braking device 31 is substantially the same as prior art.

The rear caliper 31b is provided on the swing arm 15. The rear caliper 31b includes a piston and a brake pad. When the brake pedal 31a is operated, the piston of the rear caliper 31b is actuated by hydraulic pressure in the brake hose. The brake pad of the rear caliper 31b is pressed against the rear disc 31c by this operation of the piston. As a result, the braking force acts on the rear wheel 7.

The braking-force adjustment unit 11 shown in FIG. 1 is configured to adjust the braking force of the hydraulic braking system 10. Specifically, when an input device such as the brake lever 30a and/or the brake pedal 31a is operated, the braking-force adjustment unit 11 adjusts oil pressure of the oil which is supplied to an output device such as the front caliper 30b and the rear caliper 31b. This adjustment executes a brake control such as an anti-lock brake control and/or a combined brake control of the front-and-rear wheels 4, 7.

As shown in FIG. 2, at least a portion of the braking-force adjustment unit 11 is disposed behind the head pipe 20 and in front of the fuel tank 9 in the vehicle top view. In this embodiment, a front portion of the braking-force adjustment unit 11 is disposed behind the head pipe 20 and in front of a front portion of the fuel tank 9. A rear portion of the braking-force adjustment unit 11 is disposed below the front portion of the fuel tank 9.

The braking-force adjustment unit 11 is disposed between the left frame 21 and the right frame 22 in the vehicle top view. Specifically, the braking-force adjustment unit 11 is disposed between the left upper frame 21a and the right upper frame 22a in the vehicle top view. The braking-force adjustment unit 11 is disposed between the left lower frame 21b and the right lower frame 22b in the vehicle top view. The braking-force adjustment unit 11 is disposed between the left connecting frame 21c and the right connecting frame 22c in the vehicle top view.

As shown in FIGS. 3A and 3B, an upper portion of the braking-force adjustment unit 11 is disposed between the left upper frame 21a and the right upper frame 22a. The braking-force adjustment unit 11 is disposed between the left connecting frame 21c and the right connecting frame 22c in a vehicle rear view.

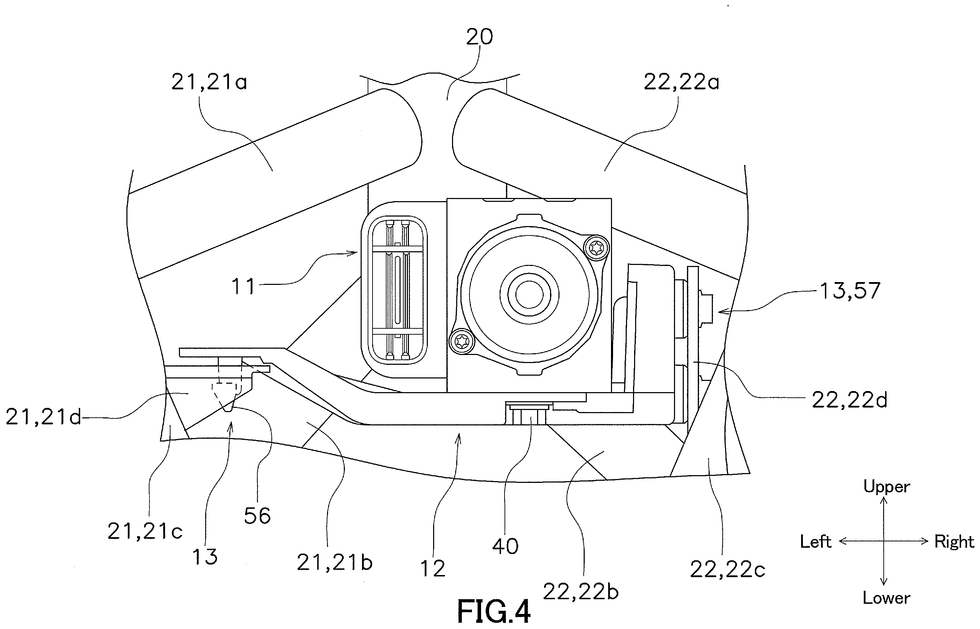

As shown in FIG. 4, the braking-force adjustment unit 11 is disposed between a pin portion 56 (described later) of the mounting structure 13 and a fastening structure 57 (described later) of the mounting structure 13 in the left-right direction. Specifically, the braking-force adjustment unit 11 is disposed at a position which is closer to the fastening structure 57 than the pin portion 56 in the left-right direction. In this embodiment, the braking-force adjustment unit 11 is disposed on a side of the right frame 22.

As shown in FIG. 4, the unit bracket 12 holds the braking-force adjustment unit 11. Specifically, the braking-force adjustment unit 11 is disposed on an upper surface of the unit bracket 12. In this state, a lower portion of the braking-force adjustment unit 11 is fixed to the unit bracket 12 by a fixing bolt 40 from a lower side of the unit bracket 12.

As shown in FIGS. 2 to 4, the unit bracket 12 is mounted to the vehicle frame 2. Specifically, as shown in FIG. 4, the unit bracket 12 is mounted to the left connecting frame 21c and the right connecting frame 22c. More specifically, the unit bracket 12 is mounted to the left connecting frame 21c and the right connecting frame 22c via a left bracket 21d and a right bracket 22d.

The left bracket 21d is mounted to the left connecting frame 21c. The left bracket 21d can be interpreted as a member or a portion which is included in the left connecting frame 21c. The right bracket 22d is mounted to the right connecting frame 22c. The right bracket 22d can be interpreted as a member or a portion which is included in the right connecting frame 22c.

As shown in FIG. 4, the unit bracket 12 is disposed between the left frame 21 and the right frame 22 in the left-right direction. Specifically, the unit bracket 12 is disposed between the left connecting frame 21c and the right connecting frame 22c in the left-right direction.

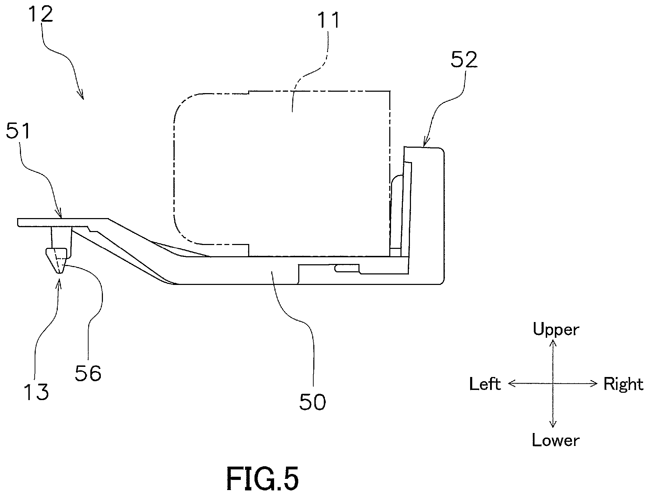

As shown in FIG. 5, the unit bracket 12 includes a unit holding portion 50, a pin-forming portion 51 and an upright portion 52. The unit holding portion 50 is a portion which holds the braking-force adjustment unit 11. The unit holding portion 50 is provided between the pin-forming portion 51 and the upright portion 52. The pin-forming portion 51 is a portion where the pin portion 56 (described later) of the mounting structure 13 is provided. The pin-forming portion 51 is formed integrally with the unit holding portion 50.

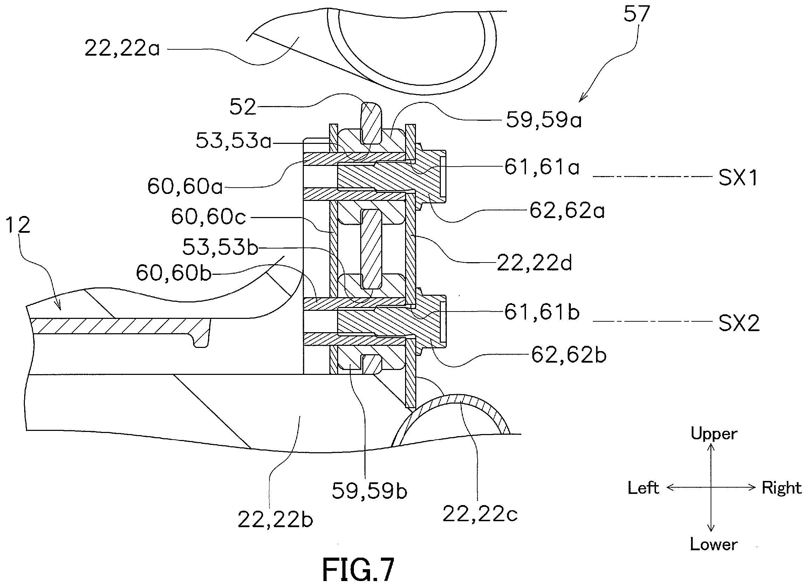

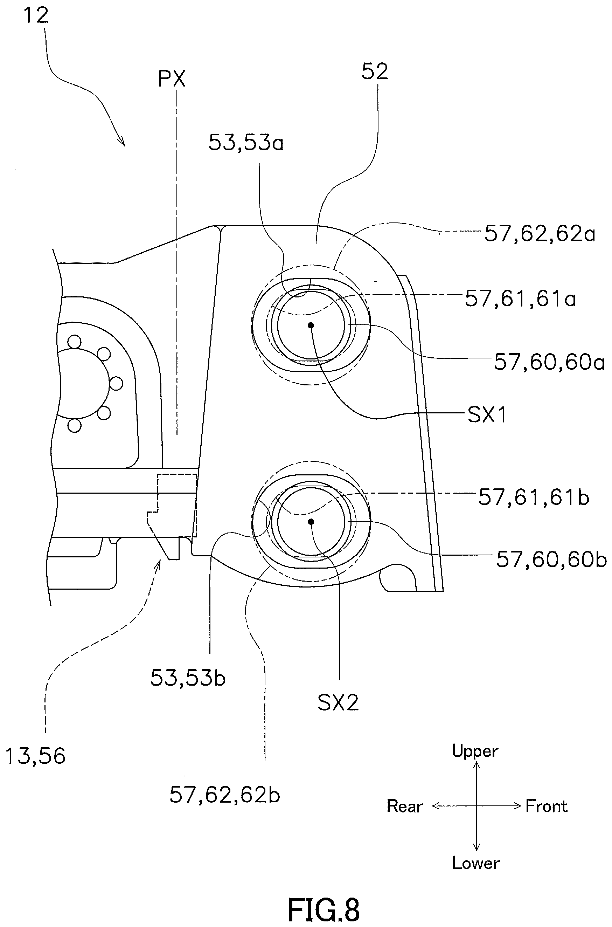

The upright portion 52 is formed integrally with the unit holding portion 50. Specifically, the upright portion 52 is formed integrally with the unit holding portion 50 so as to stand on an upper surface of the unit holding portion 50. The upright portion 52 is disposed so as to face the right bracket 22d (see FIG. 7). The upright portion 52 includes a through-hole 53 for inserting a female threaded portion 60 (described later) of the fastening structure 57. The through-hole 53 includes a plurality of through-holes, for example, two through-holes 53a, 53b. Each of the two through-holes 53a, 53b is an elongated hole which extends in a circumferential direction around an axis PX of the pin portion 56 (see FIG. 8).

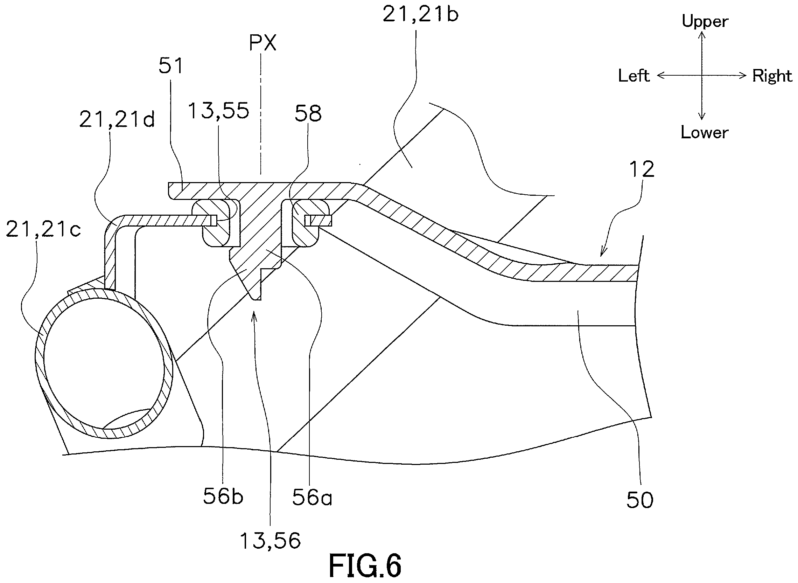

As shown in FIGS. 6 and 7, the mounting structure 13 is used to mount the unit bracket 12 to the vehicle frame 2. The mounting structure 13 includes a first hole portion 55 (see FIG. 6), the pin portion 56 (see FIG. 6) and the fastening structure 57 (see FIG. 7). The mounting structure 13 further includes a first elastic member 58 (see FIG. 6) and a second elastic member 59 (see FIG. 7).

As shown in FIG. 6, the first hole portion 55 is provided on one of the left frame 21 and the right frame 22, for example, on the left frame 21. The first hole portion 55 is provided on the left connecting frame 21c. More specifically, the first hole portion 55 is provided on the left bracket 21d of the left connecting frame 21c. The first hole portion 55 penetrates the left bracket 21d of the left connecting frame 21c in the vertical direction.

As shown in FIG. 6, the pin portion 56 is used to mount the unit bracket 12 to the one of the left frame 21 and the right frame 22, for example, to the left frame 21. The pin portion 56 is integrally formed with the unit bracket 12. Specifically, the pin portion 56 includes a pin body 56a and an stopper portion 56b.

The pin body 56a projects from the unit bracket 12, for example, from the pin-forming portion 51 of the unit bracket 12. The pin body 56a is formed in a cylindrical shape. The stopper portion 56b is configured to prevent the pin portion 56 from coming out of the first hole portion 55. The stopper portion 56b is provided at a distal end portion of the pin body 56a. The stopper portion 56b is formed in a hook shape.

The pin portion 56 is inserted into the first hole portion 55. The pin portion 56 is inserted into the first hole portion 55 in the vertical direction. Specifically, the pin portion 56 is inserted from an upper side of the first hole portion 55 toward a lower side of the first hole portion 55. In a state where the pin portion 56 is inserted into the first hole portion 55, the pin body 56a is disposed inside the first hole portion 55 and the stopper portion 56b projects below the first hole portion 55.

As shown in FIG. 6, the first elastic member 58 is disposed between the first hole portion 55 and the pin portion 56. Specifically, the first elastic member 58 is formed in an annular shape. An outer peripheral portion of the first elastic member 58 is mounted to the first hole portion 55. An inner peripheral portion of the first elastic member 58 receives the pin body 56a of the pin portion 56. In this state, an upper portion of the first elastic member 58 is disposed between the pin-forming portion 51 of the unit bracket 12 and the left bracket 21d of the left connecting frame 21c. A lower portion of the first elastic member 58 is disposed between the left bracket 21d of the left connecting frame 21c and the stopper portion 56b of the pin portion 56.

As shown in FIG. 7, the fastening structure 57 is configured to fasten the unit bracket 12 to the other of the left frame 21 and the right frame 22. In the present embodiment, the fastening structure 57 fastens the unit bracket 12 to the right frame 22.

As shown in FIG. 8, the fastening structure 57 is disposed at a position which is different from a position of the pin portion 56 in a front-rear direction. In other words, the fastening structure 57 is disposed at a position which is different from a position of the first hole portion 55 in which the pin portion 56 is inserted. In this embodiment, the fastening structure 57 is disposed in front of the pin portion 56.

As shown in FIG. 7, the fastening structure 57 is disposed between the right upper frame 22a and the right lower frame 22b in a vehicle side view. The fastening structure 57 includes the female threaded portion 60, a second hole portion 61 and a bolt 62. The female threaded portion 60 includes a plurality of female threaded portions, for example, two female threaded portions 60a, 60b. The plurality of female threaded portions 60a, 60b is provided on the unit bracket 12.

Specifically, as shown in FIG. 7, the plurality of female threaded portions 60a, 60b is provided on a connecting plate 60c. The plurality of female threaded portions 60a, 60b is disposed side by side on the connecting plate 60c in the vertical direction. The connecting plate 60c is fixed to the upright portion 52 of the unit bracket 12. In other words, the plurality of female threaded portions 60a, 60b is provided on the unit bracket 12 via the connecting plate 60c. The connecting plate 60c can be interpreted as a member or a portion which is included in the unit bracket 12.

A direction in which a axis SX1, SX2 of each of the plurality of female threaded portions 60 extends is different from a direction in which an axis PX of the pin portion 56 extends (see FIG. 8). In this embodiment, the direction in which the axis SX1, SX2 of each of the female threaded portions 60 extends is the left-right direction, and the direction in which the axis PX of the pin portion 56 extends is the vertical direction.

As shown in FIGS. 7 and 8, the second hole portion 61 includes a plurality of second hole portions, for example, two second hole portions 61a, 61b. The plurality of the second hole portions 61a, 61b is provided on the other of the left frame 21 and the right frame 22. In this embodiment, the plurality of the second hole portions 61a, 61b is provided in the right frame 22.

Specifically, as shown in FIG. 7, the plurality of second hole portions 61a, 61b is provided on the right bracket 22d of the right connecting frame 22c. The plurality of second hole portions 61a, 61b is disposed side by side in the vertical direction. Each of the plurality of second hole portions 61a, 61b penetrates the right bracket 22d of the right connecting frame 22c. Each of the plurality of second hole portions 61a, 61b is disposed at an opening end of each of the plurality of female threaded portions 60a, 60b. As shown in FIG. 8, each of the plurality of second hole portions 61a, 61b is an elongated hole which extends in the circumferential direction around the axis PX of the pin portion 56.

As shown in FIG. 7, the bolt 62 includes a plurality of bolts, for example, two bolts 62a, 62b. The plurality of bolts 62a, 62b is respectively inserted into the plurality of second hole portions 61a, 61b and is respectively threaded with the plurality of female threaded portions 60a, 60b. As a result, the plurality of bolts 62a, 62b is disposed side by side in the vertical direction.

A direction in which an axis of each of the plurality of bolts 62a, 62b extends is the same as a direction in which the axis SX1, SX2 of each of the female threaded portions 60 extends. Hereinafter, the axis of bolt 62a will be denoted by the reference sign SX1 in the same manner as the axis SX1 of the female threaded portion 60a. The axis of bolt 62b will be denoted by the reference sign SX2 in the same manner as the axis SX2 of the female threaded portion 60b.

A direction in which the axis SX1, SX2 of each of the plurality of bolts 62a, 62b extends are different from a direction in which the axis PX of the pin portion 56 extends. The direction in which the axis SX1, SX2 of each of the plurality of bolts 62a, 62b extends is different from the circumferential direction around the axis PX of the pin portion 56. In this embodiment, the axis SX1, SX2 of each of the plurality of bolts 62a, 62b extends in the left-right direction.

As shown in FIG. 7, the second elastic member 59 includes a plurality of second elastic members, for example, two second elastic members 59a, 59b. The plurality of second elastic members 59a, 59b is disposed between the unit bracket 12 and the other of the left frame 21 and the right frame 22. In this embodiment, the plurality of second elastic members 59a, 59b is disposed between the right frame 22 and the unit bracket 12.

Each of the plurality of second elastic members 59a, 59b is formed in an annular shape. The plurality of second elastic members 59a, 59b is respectively disposed in the plurality of through-holes 53a, 53b of the upright portion 52. The plurality of female threaded portions 60a, 60b is inserted into the plurality of second elastic members 59a, 59b. In this state, the connecting plate 60c is fixed to the upright portion 52 by a fixing means such as welding. As a result, the plurality of second elastic members 59a, 59b is disposed between the right bracket 22d of the right connecting frame 22c and the connecting plate 60c.

In the above straddled vehicle 1, the unit bracket 12 can be rotated in a state where the pin portion 56 is inserted into the first hole portion 55 of the left frame 21. As a result, the unit bracket 12 is set in a fastening position and is fastened to the right frame 22 by the fastening structure 57. Thus, in the straddled vehicle 1, since the unit bracket 12 is fastened only to the right frame 22, the unit bracket 12 can be easily mounted to the vehicle frame 2.

In the straddled vehicle 1, since the pin portion 56 is formed integrally with the unit bracket 12, an initial position of the unit bracket 12 relative to the vehicle frame 2 can be easily set by inserting the pin portion 56 into the first hole portion 55. In the straddled vehicle 1, since the pin portion 56 includes the stopper portion 56b, the pin portion 56 can be prevented from coming out of the first hole portion 55.

In the straddled vehicle 1, since the fastening structure 57 is disposed at the position which is different from the position of the pin portion 56 in a front-rear direction, the unit bracket 12 can be easily set to the fastening position. In the straddled vehicle 1, the female threaded portions 60 of the fastening structure 57 are provided on the unit bracket 12. The second hole portions 61 of the fastening structure 57 are provided on the right frame 22. The bolts 62 of the fastening structure 57 are inserted into the second hole portions 61 and are threaded with the female threaded portions 60. With this configuration, the unit bracket 12 can be reliably fixed to the vehicle frame 2 by the fastening structure 57.

In the straddled vehicle 1, the direction in which the axis SX1, SX2 of each of the bolts 62 of the fastening structure 57 extends is different from the direction in which the axis PX of the pin portion 56 of the mounting structure 13 extends. With this configuration, the bolts 62 can be easily inserted into the second hole portions 61 and can be easily threaded with the female threaded portions 60 after rotating the unit bracket 12 around the pin portion 56. In addition, with this configuration, the bolts 62 can be easily operated by a tool from an outside of the vehicle frame 2.

In the straddled vehicle 1, the direction in which the axis SX1, SX2 of the bolt 62 of the fastening structure 57 extends is different from the circumferential direction around the axis PX of the pin portion 56 of the mounting structure 13. With this configuration, the bolts 62 can be easily inserted into the second hole portions 61 and can be easily threaded with the female threaded portions 60 after rotating the unit bracket 12 around the pin portion 56. In addition, with this configuration, the bolts 62 can be easily operated by a tool from the outside of the vehicle frame 2.

In the straddled vehicle 1, even if the fastening structure 57 is disposed between the upper frame 21a, 22a and the lower frame 21b, 22b, the bolt 62 can be easily operated by a tool from the outside of the vehicle frame 2. In the straddled vehicle 1, since the unit bracket 12 is supported at three points by the pin portion 56 and the plurality of bolts 62a, 62b, the unit bracket 12 can be stably supported on the vehicle frame 2.

In the straddled vehicle 1, since the plurality of bolts 62a, 62b of the fastening structure 57 is disposed side by side in the vertical direction, a disengagement of the pin portion 56 can be reliably prevented. In the straddled vehicle 1, since the second hole portions 61 are an elongated hole, the female threaded portions 60 of the unit bracket 12 can easily face the second hole portions 61 of the vehicle frame 2 after rotating the unit bracket 12 around the pin portion 56,

In the straddled vehicle 1, since the first elastic member 58 of the mounting structure 13 is disposed between the first hole portion 55 and the pin portion 56, vibration, which is transmitted from the vehicle frame 2 to the unit bracket 12 and the braking-force adjustment unit 11, can be reduced by the first elastic member 58. In the straddled vehicle 1, since the second elastic member 59 of the mounting structure 13 is disposed between the right frame 22 and the unit bracket 12, vibrations, which is transmitted from the vehicle frame 2 to the unit bracket 12 and the braking-force adjustment unit 11, can be reduced by the second elastic member 59.

In the straddled vehicle 1, since the braking-force adjustment unit 11 is disposed at a position which is closer to the fastening structure 57 than the pin portion 56 in the left-right direction, the fastening structure 57 can bear more weight of the braking-force adjustment unit 11 than the pin portion 56.

In the straddled vehicle 1, since a portion of the braking-force adjustment unit 11 is disposed behind the head pipe 20 and in front of the fuel tank 9 in the vehicle top view, a space between the head pipe 20 and the fuel tank 9 can be effectively utilized as a space for the braking-force adjustment unit 11.

Although one embodiment of the present invention has been described above, the present invention is not limited to the above embodiment, and various modifications are possible without departing from the gist of the invention.

(A) In the above embodiment, an example was shown in which the first hole portion 55 of the mounting structure 13 is provided on the left frame 21 and the fastening structure 57 is provided on the right frame 22. The first hole portion 55 of the mounting structure 13 can be provided on the right frame 22 and the fastening structure 57 can be provided on the left frame 21.

(B) In the above embodiment, an example was shown in which the plurality of bolts 62a, 62b of the fastening structure 57 is two. The plurality of bolts 62a, 62b of the fastening structure 57 can be three or more bolts. In this case, at least two of the plurality of bolts are disposed side by side in the vertical direction.

### Industrial Applicability

According to the present invention, an unit bracket can be easily mounted to a vehicle frame on a straddled vehicle.

### Reference Signs List

1: Straddled vehicle, 2: Vehicle frame, 4: Front wheel, 7: Rear wheel, 9: Fuel tank, 10: Hydraulic braking system, 11: Braking-force adjustment unit, 12: Unit bracket, 13: Mounting structure, 20: Head pipe, 21: Left frame, 21a: Left upper frame, 21b: Left lower frame, 22: Right frame, 22a: Right upper frame, 22b: Right lower frame, 55: First hole portion, 56: Pin portion, 56b: Stopper portion, 57: Fastening structure, 58: First elastic member, 59: Second elastic member, 60: Female threaded portion, 61: Second hole portion, 62: Bolt, SX1, SX2: Axis of a bolt, PX: Axis of a pin portion

## Claims

1. A straddled vehicle (1) comprising:
a vehicle frame (2) including a left frame (21) and a right frame (22) disposed to face the left frame (21) in a vehicle width direction;
a front wheel (4) supported by the vehicle frame (2);
a rear wheel (7) supported by the vehicle frame (2) behind the front wheel (4);
a hydraulic braking system (10) configured to control braking force on at least one of the front wheel (4) and the rear wheel (7);
a braking-force adjustment unit (11) configured to adjust the braking force of the hydraulic braking system (10);
an unit bracket (12) holding the braking-force adjustment unit (11); and
a mounting structure (13) used to mount the unit bracket to the vehicle frame (2);
the mounting structure (13) includes a first hole portion (55) provided on one of the left frame (21) and the right frame (22), a pin portion (56) inserted into the first hole portion (55) to mount the unit bracket (12) to the one of the left frame (21) and the right frame (22), and a fastening structure (57) configured to fasten the unit bracket (12) to the other of the left frame (21) and the right frame (22).

2. The straddled vehicle according to claim 1, wherein
the pin portion (56) is formed integrally with the unit bracket (12).

3. The straddled vehicle according to claim 1, wherein
the pin portion (56) includes a stopper portion (56b) which is configured to prevent the pin portion (56) from coming out of the first hole portion (55).

4. The straddled vehicle according to claim 1, wherein
the fastening structure (57) is disposed at a position which is different from a position of the pin portion (56) in a front-rear direction.

5. The straddled vehicle according to claim 1, wherein
the fastening structure (57) includes a female threaded portion (60) provided on the unit bracket (12), a second hole portion (61) provided on the other of the left frame (21) and the right frame (22), and a bolt (62) inserted into the second hole portion (61) and threaded with the female threaded portion.

6. The straddled vehicle according to claim 5, wherein
a direction in which an axis (SX1, SX2) of the bolt (62) extends is different from a direction in which an axis (PX) of the pin portion (56) extends.

7. The straddled vehicle according to claim 5, wherein
a direction in which an axis (SX1, SX2) of the bolt (62) extends is different from a circumferential direction around an axis (PX) of the pin portion (56).

8. The straddled vehicle according to claim 6 or 7, wherein
the other of the left frame (21) and the right frame (22) includes upper and lower frames (21a, 22a; 21b, 22b) which are disposed at an interval from each other in a vertical direction, and
the fastening structure (57) is disposed between the upper frame (21a, 22a) and the lower frame (21b, 22b).

9. The straddled vehicle according to claim 5, wherein
the bolt (62) includes a plurality of bolts.

10. The straddled vehicle according to claim 9, wherein
the pin portion (56) is inserted into the first hole portion (55) in a vertical direction, and
at least two of the plurality of bolts (62) are disposed side by side in the vertical direction.

11. The straddled vehicle according to claim 5, wherein
the second hole portion (61) is an elongated hole which extends in a circumferential direction around an axis (PX) of the pin portion (56).

12. The straddled vehicle according to claim 1, wherein
the mounting structure (13) includes a first elastic member (58) which is disposed between the first hole portion (55) and the pin portion (56).

13. The straddled vehicle according to claim 1, wherein
the mounting structure (13) includes a second elastic member (59) which is disposed between the unit bracket (12) and the other of the left frame (21) and the right frame (22).

14. The straddled vehicle according to claim 1, wherein
the braking-force adjustment unit (11) is disposed between the pin portion (56) and the fastening structure (57) in the vehicle width direction and is disposed at a position which is closer to the fastening structure (57) than the pin portion (56) in the vehicle width direction.

15. The straddled vehicle according to claim 1, further comprising:
a fuel tank (9) disposed above the left frame (21) and the right frame (22), wherein
the vehicle frame (2) includes a head pipe (20) to which the left frame (21) and the right frame (22) are connected, and
at least a portion of the braking-force adjustment unit (11) is disposed behind the head pipe (20) and in front of the fuel tank (9) in a plan view of the vehicle (1).
